# EUROPÄISCHE PATENTANMELDUNG

(11) **EP 1 312 490 A1**
(43) Veröffentlichungstag der Anmeldung: **21.05.2003**
(21) Anmeldenummer: 02024232.7
(22) Anmeldetag: 31.10.2002
(51) Int. Cl.: B60C 11/12

(54) **Fahrzeugluftreifen**

(30) Priorität: 17.11.2001 DE 10156670
(71) Anmelder: Continental Aktiengesellschaft, 30165 Hannover (DE)
(72) Erfinder: Kendziorra, Norbert, 30827 Garbsen (DE); Heinrich, Gert, Dr., 30163 Hannover (DE); Mundl, Reinhard, Dr., 30539 Hannover (DE); Hindriks, Günter, 31137 Hildesheim (DE)

(57) **Zusammenfassung**

Die Erfindung betrifft einen Fahrzeugluftreifen, insbesondere für den Einsatz unter winterlichen Fahrbedingungen, mit einem Laufflächenprofil mit Profilpositiven, die von Einschnitten, die ein Muster bilden, über- bzw. durchzogen sind. Das Einschnittmuster (7, 7', 7", 8, 9, 10, 10') ist zumindest teilweise auf der Basis einer flächenfüllenden und nicht selbst berührenden Kurve erstellt.

## Beschreibung

Die Erfindung betrifft einen Fahrzeugluftreifen, insbesondere für den Einsatz unter winterlichen Fahrbedingungen, mit einem Laufflächenprofil mit Profilpositiven, die von Einschnitten, welche ein Muster bilden, über- bzw. durchzogen sind.

Fahrzeugluftreifen mit Laufflächenprofilen, die insbesondere für den Einsatz unter winterlichen Fahrbedingungen, wie schnee- oder eisbedeckten Fahrbahnen, geeignet sind, weisen Profilpositive - Blöcke- und / oder Laufstreifenbänder - auf, die jeweils mit einer Vielzahl von Einschnitten versehen sind, die auf unterschiedlichste Weise ausgeführt sein können und verlaufen können. Zu den Themen Ausgestaltung, Ausführung und Verlauf von Einschnitten in Profilpostiven existiert bereits eine Vielzahl von Patentanmeldungen und Patenten, die sich vor allem mit den unterschiedlichen Aspekten der Beeinflussung der Profileigenschaften durch solche Einschnitte befassen.

Ein Fahrzeugluftreifen der eingangs genannten Art ist beispielsweise aus der EP-B-0 691 222 bekannt. Um die Biegesteifigkeit der Profilpositive gezielt beeinflussen zu können und gleichzeitig eine hohe Einschnittdichte zu gewährleisten, wird hier vorgeschlagen, die Einschnitte in der Form eines Netzes aus Fünf- oder Sechsecken anzuordnen. Als besonders vorteilhaft hat sich dabei anscheinend die sechseckförmige bzw. bienenwabenförmige Anordnung der Einschnitte erwiesen.

Auch bei dem aus der EP-A-0 618 092 bekannten Laufflächenprofil geht es um die Beeinflussung der Biegesteifigkeit der Profilpositive durch eine spezielle Anordnung der diese überziehenden Einschnitte. Die hier vorgeschlagene Lösung besteht darin, das Einschnittmuster derart auszuführen, dass es sich aus Einzelelementen zusammensetzt, die zumindest annähernd Doppel-T-Träger-förmig gestaltet sind.

Wie bereits erwähnt, lässt sich durch bekannte Einschnittmuster, beispielsweise durch eine bienenwabenförmige Anordnung der Einschnitte, eine sehr hohe und für die Winterfahreigenschaften günstige Einschnittdichte erzielen. Die bekannten Einschnittmuster sind durch eine Vielzahl von Schnittstellen oder Einmündungsstellen von Einschnittabschnitten geprägt. Es hat sich gezeigt, dass bei bestimmten und in bestimmten Richtungen erfolgenden Beanspruchungen stellenweise ein Aufklappen des Profilpositivs im Bereich dieser Schnittstellen auftreten kann, durch welches das Kraftschlußpotential reduziert wird. Ein weiterer Nachteil der bekannten und sehr komplex ausgeführten Einschnittmuster ist, dass deren Herstellung meist aufwändig und schwierig ist, da die Lamellen zur Ausformung solcher Einschnittsstrukturen ineinandergreifende, miteinander verschachtelte und sich gegenseitig abzustützende Lamellenblechteile erfordern. Gerade die Kreuzungs- und Mündungsbereiche der oben erwähnten Einschnittsstrukturen lassen sich nur sehr aufwändig durch Lamellenbleche nachstellen.

Der Erfindung liegt die Aufgabe zu Grunde, eine Alternative zu den bekannten Lösungen aufzufinden, die diese Nachteile nicht aufweist.

Gelöst wird die gestellte Aufgabe erfindungsgemäß dadurch, dass das Einschnittmuster zumindest teilweise auf der Basis einer flächenfüllenden und nicht selbst berührenden Kurve erstellt ist.

Nach der Erfindung lassen sich sowohl einfache als auch sehr komplexe und mit ineinandergreifenden Strukturen versehene Einschnittmuster gestalten, die aber keine Schnitt- und Einmündungsstellen von Einschnittabschnitten aufweisen. Die Vielzahl von möglichen konstruktiven Varianten flächenflüllender und nicht selbstberührender Kurven, die in Frage kommen, eröffnet eine große Anzahl von Möglichkeiten zur gezielten Beeinflussung und Steuerung der Steifigkeit der Profilpositive. Damit lässt sich eine Vielzahl von Eigenschaften des Reifens beeinflussen und verbessern, beispielsweise das Bremsverhalten auf trockenen Fahrbahnen und die Handlingseigenschaften. Erfindungsgemäß ausgeführte Einschnittmuster können eine sehr hohe Einschnittdichte gewährleisten und Einschnittsstrukturen zur Verfügung stellen, die einen sehr guten Eis- und Schneegriff gewährleisten. Die mit erfindungsgemäßen Einschnittmustern versehenen Profilpositive lassen sich vor allem auch derart gestalten, dass eine gute Balance von Winterfahreigenschaften und Sommerfahreigenschaften erzielbar ist. Das macht erfindungsgemäß gestaltete Laufstreifenprofile auch für den Ganzjahreseinsatz interessant.

Eine Anzahl von bekannten, flächenfüllenden und nicht selbstberührenden Kurven ist dafür besonders geeignet, erfindungsgemäß ausgeführten bzw. verlaufenden Einschnittmustern zu Grunde gelegt zu werden. Zu diesen Kurven gehört die Hilbert- Kurve, die Peano- Kurve, die Koch- Kurve und die Peano- Gosper- Kurve. Gerade mit Einschnittmustern auf der Basis solcher Kurven lässt sich die Biegesteifigkeit von Profilpositiven gezielt beeinflussen und gezielt auslegen.

Die "Feinheit" der Einschnittstruktur lässt sich durch die Anzahl der Iterationsschritte, welche zum Bilden der betreffenden Kurven, die Basis für die Einschnittmuster sind, herangezogen wurden, bestimmen. Für erfindungsgemäß ausgeführte Einschnittmuster in Laufflächenprofilen eignen sich vor allem Muster, die auf Kurven im zweiten bis zehnten Iterationsschritt, insbesondere bis zum vierten Iterationsschritt, basieren.

Weitere Anpassungen an erwünschte bzw. bestimmte Eigenschaften des Laufstreifenprofils sind dann erzielbar, wenn das Einschnittmuster auf einer Kurve basiert, die durch die Anwendung verschiedener Generatoren entstanden ist und/oder wenn Ausführungen gewählt werden, bei welchen das Einschnittmuster auf einer Kurve basiert, deren Polygonzüge gestreckt, verschoben, gedehnt oder mit Rundungen versehen worden sind.

Je nach Profilausführung kann es auch von Vorteil sein, erfindungsgemäß ausgeführte Einschnittmuster, insbesondere an den Rändern bzw. Kanten von Profilpositiven, mit weiteren Einschnitten, die in das Einschnittmuster einmünden können, zu kombinieren.

Weitere Merkmale, Vorteile und Einzelheiten der Erfindung werden nun anhand der Zeichnung, die schematische Darstellungen von Ausführungsformen der Erfindung enthält, näher beschrieben. Dabei zeigen
Fig. 1 eine Draufsicht auf eine Abwicklung eines Ausführungsbeispiels eines gemäß der Erfindung ausgeführten Laufflächenprofils eines Fahrzeugluftreifens,
Fig 2a bis 2c Einschnittmuster, die auf gerundeten Peano- Kurven basieren,
Fig. 3 ein Einschnittmuster, welches auf der Hilbert- Kurve basiert,
Fig. 4a bis 4e die Grundzüge des Entstehens der Hilbert- Kurve gemäß Fig. 3,
Fig. 5 eine weitere Variante eines auf der Hilbert- Kurve basierendes Einschnittmusters und
Fig. 6 und Fig. 7 Ausführungsformen von Einschnittmustern, die auf unterschiedlichen Iterationsstufen der Peano- Gosper- Kurve basieren.

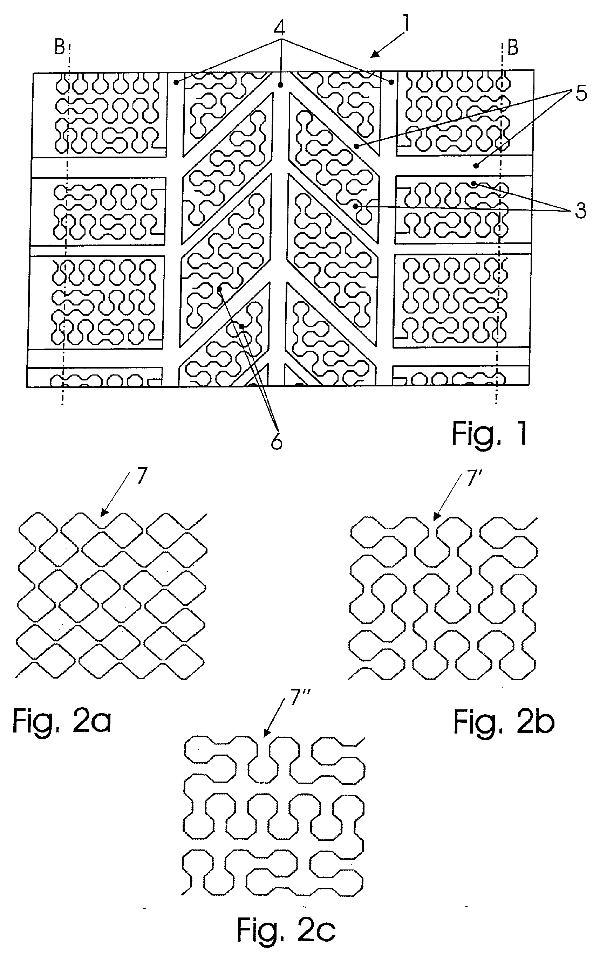

Das in Fig. 1 dargestellte Laufflächenprofil 1 für PKW - Radialreifen ist für den Einsatz unter winterlichen Fahrbedingungen, etwa auf schnee- oder eisbedeckten Fahrbahnen, sehr gut geeignet, weist aber auch gute Fahreigenschaften auf trockenem Untergrund auf. Die mit B bezeichneten strichlierten Linien an den Seiten des Laufflächenprofils 1 kennzeichnen den jeweiligen Laufflächenrand und somit jenen Bereich des Laufflächenprofils 1, welcher unter normalen Bedingungen beim Abrollen des Reifens mit dem Untergrund in Kontakt kommt. Der Aufbau des Reifens ist nicht Gegenstand dieser Erfindung und kann auf herkömmliche Weise erfolgen.

Die Erfindung besteht in der besonderen Ausgestaltung bzw. dem besonderen Verlauf der Einschnitte 6 in den Profilpositiven, die in Fig. 1 als Profilblöcke 3 ausgeführt sind. Der beispielhaft dargestellten Anordnung dieser Profilblöcke 3 kommt keine wesentliche Bedeutung zu. Die dargestellte Ausführung des Laufflächenprofils 1 mit vier in Umfangsrichtung verlaufenden Blockreihen, drei Umfangsnuten 4 und einer Vielzahl von Querrillen 5 kann daher durch abweichend ausgeführte und angeordnete Profilpositive ersetzt werden. Die Blöcke 3 sind mit einem besonderen Einschnittmuster versehen bzw. überzogen, welches aus aneinander gereihten Einschnittabschnitten 6 besteht, deren Art der Aneinanderreihung ein geometrisches Muster ergibt, auf welches nach näher eingegangen wird. Die Breite der Einschnitte bzw. Einschnittabschnitte 6 liegt im üblichen Bereich von insbesondere 0,4 bis 0,6 mm, ihre Tiefe kann bis auf Profiltiefe (= Tiefe der breiten Nuten und Rillen) reichen. Dabei können einzelne Abschnitte 6 oder Teile derselben mit geringerer Tiefe ausgeführt werden. Auch diese Maßnahme ist grundsätzlich bekannt.

Der erfindungsgemäße Einschnittverlauf in den Profilpositiven 3 basiert auf flächenfüllenden, nicht selbst berührenden Kurven. Diese Kurven sind grundsätzlich bekannt, wobei diesbezüglich auf die einschlägige Literatur zum Thema "Fraktale" verweisen wird, insbesondere auf das . Buch "Die fraktale Geometrie der Natur", Benöit B. Mandelbrot, Birkhäuser Verlag.

Die den erfindungsgemäß ausgeführten Einschnittmustern zu Grunde gelegten Kurven bestehen grundsätzlich aus Strecken oder Polygonzügen. Die Strecke bzw. der Polygonzug, welcher als Ausgangskonfiguration verwendet wird, wird als Initiator bezeichnet. Der Initiator wird im ersten Iterationsschritt durch den Polygonzug eines Generators ersetzt. Der Generator- Polygonzug kann dabei verschoben, gestreckt und gedehnt werden. In weiteren Iterationsschritten wird der im ersten Iterationsschritt erhaltene Polygonzug wieder stückweise (jede Strecke einzeln) durch den Generator (oder einem anderen Generator, falls mehrere verwendet werden) ersetzt. Ein bzw. mehrere Generator(en) kann bzw. können daher eine große Vielfalt an Kurven erzeugen, je nach der Form des Initiators und der Regel, wie der bzw. die Generator(en) gesetzt wird bzw. werden.

Anhand einiger für die Erstellung von Einschnittmustern und Einschnittsstrukturen in Laufstreifenprofilen von Reifen besonders geeigneter Kurven wird nun die Erfindung näher erläutert.

Fig. 2a zeigt ein Einschnittmuster 7, welches auf der Peano- Kurve gemäß dem dritten Iterationsschritt basiert. Der Initiator der Peano- Kurve ist ein Einheitsquadrat. Nach drei Iterationsschritten entsteht durch die Anwendung einer Rundungsvorschrift das in Fig. 2a gezeigte Muster 7 einer flächenfüllenden, nicht selbst berührenden Kurve mit diagonal gegenüberliegenden Anfangs- und Endpunkten. Durch die Anwendung weiterführende Rundungsvorgänge entstehen die in Fig. 2b und Fig. 2c dargestellten Einschnittmuster 7', 7". Das in Fig. 2b gezeigte Muster ist das in den Profilblöcken 3 der Fig. 1 dargestellte Muster. Profilpositive mit einem auf der Basis der Peano- Kurve erstellten Einschnittverlauf weisen eine in alle Richtungen besonders ausgewogene Steifigkeit auf.

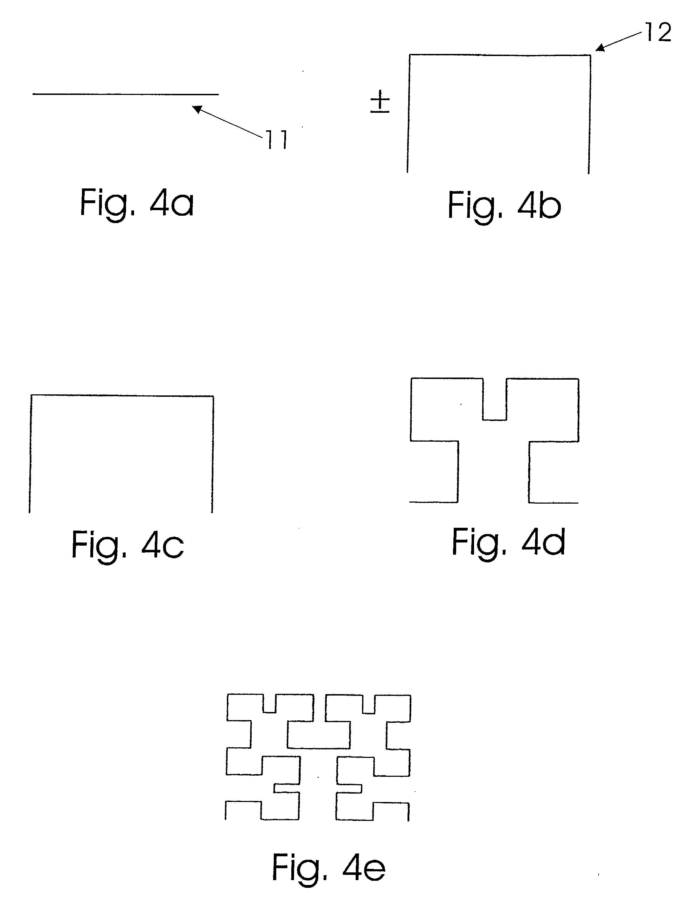

Fig. 3 zeigt ein Einschnittmuster 8, welches auf der Hilbert- Kurve gemäß dem vierten Iterationsschritt basiert. Auch hier ist die Kurve, entlang welcher die jeweils unter einem rechten Winkel aneinander anschließenden Einschnittabschnitte 8a verlaufen, eine flächendeckende und nicht selbst berührende Kurve. Fig. 4a bis 4e veranschaulichen das Entstehen dieser Kurve. Gemäß Fig. 4a ist der Initiator 11 dieser Kurve eine Strecke, der Generator 12 (Fig. 4b) besteht aus drei Seiten eines Rechteckes, Fig. 4c zeigt die im ersten Iterationsschritt entstehende Kurve, Fig. 4d die im zweiten Iterationsschritt gebildete Kurve und Fig. 4e jene im dritten Iterationsschritt entstehende Kurve. Die Kurve gemäß dem dritten Iterationsschritt könnte ebenfalls Basis für die Erstellung eines Einschnittmusters in Profilpositiven von Laufstreifen sein.

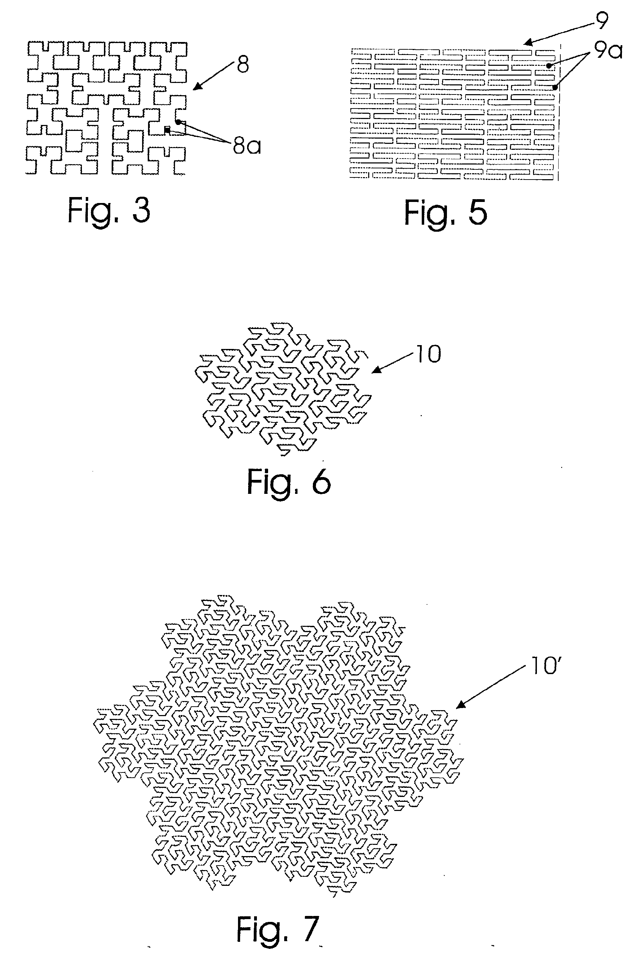

In Fig. 5 zeigt ein Einschnittmuster 9, welchem eine Variante der Hilbert- Kurve im dritten Iterationsschritt zu Grunde liegt. Das Einschnittmuster 9 setzt sich ebenfalls aus rechtwinkelig aneinander gereihten Einschnittabschnitten 9a zusammen, wobei die in einer der beiden Richtungen verlaufenden Einschnittabschnitte 9a wesentlich länger ausgeführt sind, als jene, die in der anderen Richtung verlaufen. Wird dieses Einschnittmuster 9 in Profilpositiven derart angeordnet, dass die langen Einschnittabschnitte 9a eher in bzw. in Querrichtung des Laufflächenprofils verlaufen, so können vor allem die Griffeigenschaften günstig beeinflußt werden.

Weitere Beispiele von Einschnittmustern 10, 10', die auf der Basis der Peano - Gosper- Kurve erstellt sind, zeigen Fig. 6 und Fig. 7. Fig. 6 zeigt dabei ein Einschnittmuster 10, welchem die Peano- Goper- Kurve nach dem dritten Iterationsschritt zu Grunde liegt, Fig. 7 zeigt ein Einschnittmuster 10' gemäß dem vierten Iterationsschritt dieser Kurve. Die Einschnittmuster 10. 10' bestehen aus sehr gleichmäßig eine Fläche bedeckenden Kurven mit einer Vielzahl von Verzweigungen und ineinander verschachtelten Armen. Es wäre auch möglich, ein auf dem zweiten Iterationsschritt der Peano- Gosper- Kurve basierendes Einschnittmuster zu erstellen.

Mit erfindungsgemäß ausgeführten bzw. verlaufenden Einschnittmustern in Profilpositiven lässt sich die Steifigkeit eines Profilpositivs beeinflussen und gezielt auslegen. Insbesondere kann durch den jeweiligen Verlauf der Einschnitte das Verhältnis der Steifigkeit in Umfangsrichtung zur Steifigkeit in Querrichtung der Lauffläche bestimmt und eingestellt werden. Von besonderem Vorteil ist bei Einschnittmustern gemäß der Erfindung, dass sich oft ungünstig erweisende Stoßstellen und Mündungsbereiche von zusammentreffenden Einschnittabschnitten vermieden werden können. Erfindungsgemäße Einschnittstrukturen können auch derart ausgelegt werden, dass eine Verbesserung der Bremseigenschaften auf trockenen Fahrbahnen und insgesamt eine Verbesserung der Handlingseigenschaften erreichbar ist. Im Bereich der Kanten der Profilpositive zu Nuten ist es günstig, wenn die den Verlauf der Einschnittstruktur bestimmende Kurve zumindest stellenweise unterbrochen wird und / oder eine Kombination mit anderen Einschnitten, die nicht Bestandteil dieser Kurve sind, erfolgt. Erfindungsgemäß ausgeführte Einschnittstrukturen lassen sich einfach konstruieren und sind prinzipiell auch bei starker Verzweigung und Verschränkung aus einem einzigen Lamellenblech herstellbar.

Als Basis für erfindungsgemäße Einschnittstrukturen verwendbare Kurven sind, je nach den eingesetzten Generatoren, Kurven im zweiten bis zehnten Iterationsschritt geeignet. Es existieren noch weitere flächenbedeckende und nicht selbst berührende Kurven, wie etwa die Koch-Kurve, die ebenfalls zur Konstruktion erfindungsgemäßer Einschnittmuster heran gezogen werden können.

## Patentansprüche

1. Fahrzeugluftreifen, insbesondere für den Einsatz unter winterlichen Fahrbedingungen, mit einem Laufflächenprofil mit Profilpositiven, die von Einschnitten, die ein Muster bilden, über- bzw. durchzogen sind,
**dadurch gekennzeichnet,**
**dass** das Einschnittmuster (7, 7', 7", 8, 9, 10, 10') zumindest teilweise auf der Basis einer flächenfüllenden und nicht selbst berührenden Kurve erstellt ist.

2. Fahrzeugluftreifen nach Anspruch 1, **dadurch gekennzeichnet, dass** das Einschnittmuster (8, 9) auf der Hilbert- Kurve basiert.

3. Fahrzeugluftreifen nach Anspruch 1, **dadurch gekennzeichnet, dass** das Einschnittmuster (7, 7', 7") auf der Peano- Kurve basiert.

4. Fahrzeugluftreifen nach Anspruch 1, **dadurch gekennzeichnet, dass** das Einschnittmuster auf der Koch- Kurve basiert.

5. Fahrzeugluftreifen nach Anspruch 1, **dadurch gekennzeichnet, dass** das Einschnittmuster (10, 10') auf der Peano- Gosper- Kurve basiert.

6. Fahrzeugluftreifen nach einem der Ansprüche 1 bis 5, **dadurch gekennzeichnet, dass** das Einschnittmuster (7, 7', 7", 8, 9, 10, 10') auf einer Kurve gemäß dem zweiten bis zehnten Iterationsschritt, insbesondere bis gemäß dem vierten Iterationsschritt, basiert.

7. Fahrzeugluftreifen nach einem der Ansprüche 1 bis 6, **dadurch gekennzeichnet, dass** das Einschnittmuster (7, 7', 7", 8, 9, 10, 10') auf einer Kurve basiert, die durch die Anwendung verschiedener Generatoren entstanden ist.

8. Fahrzeugluftreifen nach einem der Ansprüche 1 bis 7, **dadurch gekennzeichnet, dass** das Einschnittmuster (7, 7', 7", 8, 9, 10, 10') auf einer Kurve basiert, deren Polygonzüge gestreckt, verschoben, gedehnt oder mit Rundungen versehen worden sind.

9. Fahrzeugluftreifen nach einem der Ansprüche 1 bis 8, **dadurch gekennzeichnet, dass** das auf einer flächenfüllenden, nicht selbst berührenden Kurve basierende Einschnittmuster (7, 7', 7", 8, 9, 10, 10'), insbesondere an den Rändern bzw. Kanten eines Profilpositivs (3), mit weiteren Einschnitten, die in das Einschnittmuster münden, kombiniert ist.
